# EUROPÄISCHE PATENTSCHRIFT

(11) **EP 2 710 712 B1**
(45) Veröffentlichungstag und Bekanntmachung des Hinweises auf die Patenterteilung: **20.05.2015**
(21) Anmeldenummer: 12713909.5
(22) Anmeldetag: 20.03.2012
(51) Int. Cl.: H02K 5/167, H02K 5/24

(54) **ANLAUFSCHEIBE FÜR EINE ELEKTRISCHE MASCHINE**
THRUST WASHER FOR AN ELECTRIC MACHINE
RONDELLE DE BUTÉE POUR UNE MACHINE ÉLECTRIQUE

(30) Priorität: 18.05.2011 DE 102011076081
(43) Veröffentlichungstag der Anmeldung: 26.03.2014
(73) Patentinhaber: Robert Bosch GmbH, 70442 Stuttgart (DE)
(72) Erfinder: WINKLER, Wolfgang, 77746 Schutterwald (DE); BEHELFER, Lena, 77815 Buehl (DE); SCHULER, Dieter, 77815 Buehl (BR); KUENZEL, Gerald, 77839 Lichtenau (DE)
(86) Internationale Anmeldenummer: PCT/EP2012/054908
(87) Internationale Veröffentlichungsnummer: WO 2012/156133

(56) Entgegenhaltungen:
- EP-A1- 0 698 956
- DE-A1-102008 062 432
- US-B1- 6 707 177
- "Hytrel - thermoplastic polyester elastomer, Injection Molding Guide", , 1. Januar 2000 (2000-01-01), Seiten 1-37, XP055051472, Gefunden im Internet: URL:http://www2.dupont.com/Plastics/en_US/ assets/downloads/processing/H81091.pdf [gefunden am 2013-01-28]

## Beschreibung

Die Erfindung geht aus von einer Anlaufscheibe für eine elektrische Maschine nach dem Oberbegriff des Patentanspruchs 1. Eine derartige Anlaufscheibe für eine elektrische Maschine ist auf einer Welle zwischen einem Lager und einem Rotor, insbesondere einem von Bürsten beaufschlagten, rotierenden elektrischen Kontaktelement und/oder einem Lamellenpaket des Rotors, anordenbar. Die Anlaufscheibe weist einen Bereich zur Dichtung mit zwei Stirnseiten auf und hat an jeder Stirnseite wenigstens einen Auflageabschnitt für das Lager bzw. den Rotor.

### Stand der Technik

Elektromotoren, wie sie üblicherweise für Heiz- und Klimamotoren eingesetzt werden, müssen hohe Anforderung bezüglich Geräusch erfüllen. Einen großen Einfluss darauf hat die sogenannte Ankerlängsschwingung, die über das im Elektromotor befindliche Längsspiel von üblicherweise einigen Zehntel Millimetern im Betrieb angeregt wird. Im Elektromotor befinden sich sogenannte Anlaufscheiben, die zwischen den stehenden Gleitlagern und dem sich drehenden Anker oder Rotor angeordnet sind und durch ihre Materialeigenschaften - wie Verschleißfestigkeit, Oberfläche, Standzeit etc. - die Reibung mindern. Aufgrund ebenfalls hoher Anforderungen an die Standzeit, d.h. Verschleißfestigkeit, hat das Material, in der Regel elastischer Kunststoff, wie zum Beispiel Polyester-Elastomer, eine geringe eigene Elastizität. Es ist auch bekannt, Wellscheiben oder Wellringe einzubauen. Diese funktionieren aber nur bei Kontakt zwischen den stehenden und drehenden Teile.

Es ist möglich, durch geschickte Wahl von Elastizität und Dämpfung der Anlaufscheibe die Anregung der Axialschwingung soweit zu modifizieren, dass sie im Betrieb gedämpft wird und so zu keiner Geräuschanregung führt. Aus der DE 10 2004 044 340 A1 ist beispielsweise eine Anlaufscheibe der oben genannten Art für eine elektrische Maschine bekannt, bei der die Auflageabschnitte der beiden Stirnseiten über an der Anlaufscheibe ausgebildete, federnde Abschnitte miteinander verbunden sind. Aus der DE 102008062432 A1 und der EP 0698956 A1 sind Anlaufscheiben bekannt, die aus einer Hart- und einer Weichkomponente bestehen.

Es ist Aufgabe der Erfindung, eine Anlaufscheibe für eine elektrische Maschine bereitzustellen, die die Dämpfung der Ankerlängsschwingung gegenüber bestehenden Anlaufscheiben in Verbindung mit einer Kostenreduzierung weiter verbessert und die Geräuschanregung weiter verringert.

### Vorteile der Erfindung

Die erfindungsgemäße Anlaufscheibe für eine elektrische Maschine mit den kennzeichnenden Merkmalen des Anspruchs 1 hat den Vorteil, dass die Dämpfung der Ankerlängsschwingung in Verbindung mit einer Verringerung der Geräuschanregung ohne Verwendung von Zusatzteilen (z.B. Wellringe) verbessert werden kann. Zudem ergeben sich eine höhere Verschleißfestigkeit sowie ein einfacher Maschinenaufbau. Zu diesem Zweck besteht die Anlaufscheibe in erfinderischer Weise aus mindestens einer Hartkomponente und einer Weichkomponente, wobei der am Rotor und/oder Lager der elektrischen Maschine anliegende Teil des radialen Anlägeabschnitts durch die Weichkomponente gebildet ist. Auf diese Weise können im Betrieb große Axialkräfte über die Hartkomponente abgefangen werden, während die Weichkomponente der Ankerlängsschwingung entgegen wirkt und eine entsprechende Anregung verhindert.

Weitere Vorteile der Erfindung ergeben sich durch die in den abhängigen Ansprüchen angegebenen Merkmale sowie aus der Zeichnung und der nachfolgenden Beschreibung.

Erfindungsgemäß ist vorgesehen, dass der Anlageabschnitt mindestens zwei in axialer Richtung der Welle beabstandete Ebenen aufweist, wobei eine erste Ebene durch den am Lager oder Rotor anliegenden Teil des Anlageabschnitts gebildet ist und mindestens eine zweite Ebene zwischen der ersten Ebene und dem Rückführbereich angeordnet ist, wobei die zweite Ebene sowohl aus der Weichkomponente als auch aus der Hartkomponente besteht. Durch diese Anordnung wird die Kraft über einen elastischen Bereich - nämlich die als Weichkomponente ausgebildete erste Ebene - eingeleitet und das Dämpfungsverhalten weiter verbessert. Die Hartkomponente der zweiten Ebene verhindert dabei wirksam eine Beschädigung der Weichkomponente der ersten Ebene bei hohen Axialkräften. Erfindungsgemäß sind die Weichkomponente und die Hardkompontente zwischen der ersten Ebene und dem Bereich zur Schmiermittelrückführung in axialer Richtung der Welle derart voneinander beabstandet, dass sich die Hartkomponente in Richtung der ersten Ebene weiter erstreckt als die Weichkomponente, jedoch unterhalb des Niveaus der ersten Ebene verbleibt. Auf diese Weise kann ein definierter Anschlag in axialer Richtung erreicht werden, bis zu dem eine Dämpfung durch die Weichkomponente gewährleistet ist.

Um eine zusätzliche Abdichtfunktion gegen Kriechöl aus dem Lager in Richtung Rotor, insbesondere Kommutator, zu vermeiden, ist in vorteilhafter Weise die Weichkomponente an ihrem Innendurchmesser, vorzugsweise über die gesamte axiale Ausdehnung ihres wellenseitigen Anlagebereichs zwischen den beiden radialen Anlagebereichen, umlaufend ausgebildet.

In einer vorteilhaften Ausgestaltung der Erfindung bestehen die Hartkomponente und die Weichkomponente aus demselben Material, beispielsweise Hytrel. Somit kann die Anlaufscheibe einstückig ausgebildet sein, wobei sich die Härtegrade (angegeben in Shore D) der Hartkomponente und der Weichkomponente um mindestens Shore D = 5 unterscheiden. Auf diese Weise ist eine deutliche Reduzierung der axialen Steifigkeit und somit eine Dämpfung in Axialrichtung zum Beispiel durch Verwendung von zwei Hytrel-Materialien (oder entsprechender Materialen mit vergleichbarer Eigendämpfung, Abriebfestigkeit und Temperaturstabilität) möglich.

### Ausführungsbeispiele

### Zeichnung

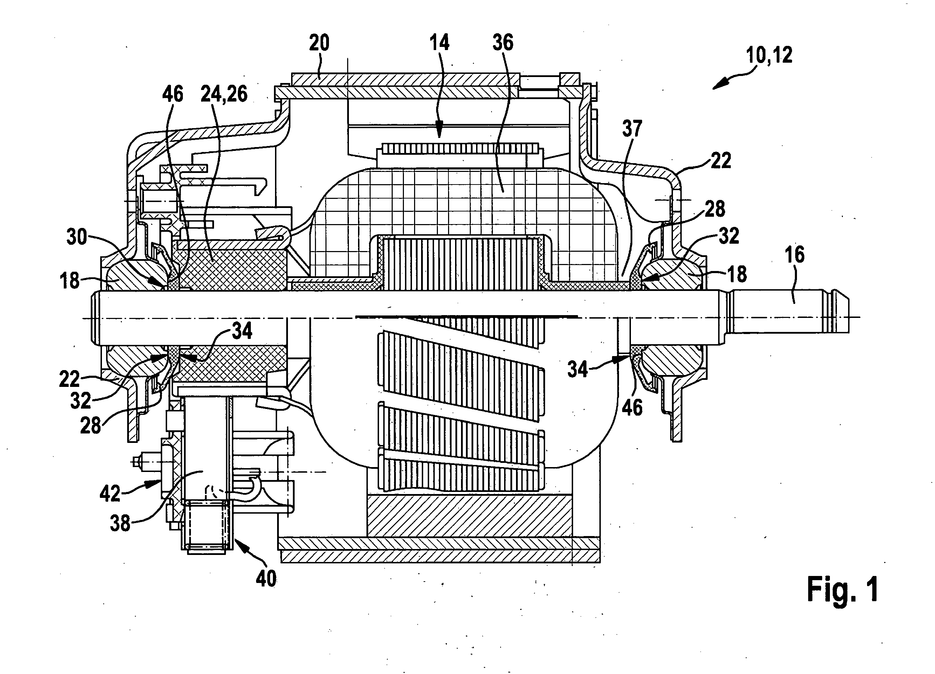

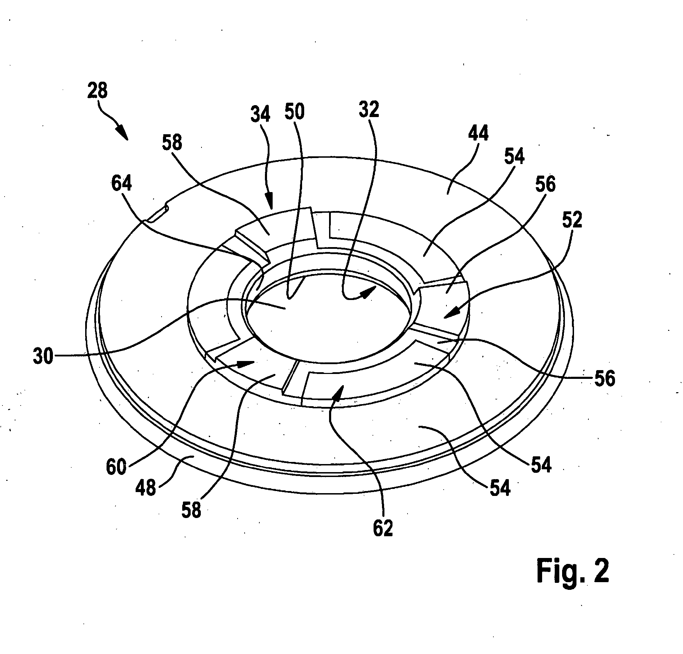

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

Es zeigen
Fig. 1: eine elektrische Maschine nach dem Stand der Technik in einem Längsschnitt und
Fig. 2: eine beispielhafte Anlaufscheibe in einer perspektivischen Ansicht.

### Beschreibung der Ausführungsbeispiele

In Fig. 1 ist ein Teil einer rotierende elektrische Maschine 10 nach dem Stand der Technik vereinfacht in einem Längsschnitt dargestellt. Die elektrische Maschine 10 ist ein Elektromotor 12, der in einem Kraftfahrzeug beispielsweise in einem Fensterheber, Wischerantrieb, vorzugsweise einem Heiz- und Gebläseantrieb etc. verwendet wird. Es kann jedoch auch ein Generator sein.

Der Elektromotor 12 weist einen bewickelten Rotor 14 auf, der auf einer Welle 16 angeordnet ist. Die Welle 16 ist mit zwei Lagern 18 gelagert. Im vorliegenden Ausführungsbeispiel handelt es sich bei den Lagern 18 um gesinterte Kalottenlager beziehungsweise Gleitlager, die mit Öl getränkt sind. Es können aber auch andere Lager 18, wie etwa Kugellager oder dergleichen, zum Einsatz kommen. Die Lager 18 sind jeweils in sich an den beiden Stirnseiten eines Gehäuses 20 des Elektromotors 12 befindlichen Lagerschilden 22 angeordnet.

Zwischen einem der Lager 18 und einem als elektrisches Kontaktelement 24 dienenden Kommutator 26 ist auf der Welle 16 eine Anlaufscheibe 28 mit einer Aufnahmebohrung 30 für die Welle 16 angeordnet, wobei die Anlaufscheibe 28 vorzugsweise mit ihren ersten Stirnseite 32 am Lager 18 und mit ihrer zweiten Stirnseite 34 am Kommutator 26 anliegt und vorzugsweise einen Presssitz auf der Welle 16 hat. Durch den Presssitz wird auf der Welle 16 eine Abdichtung erreicht. Zwischen dem anderen Lager 18 und dem Rotor 14 bzw. einem Lamellenpaket 36 oder dem Bund 37 einer Isolierlamelle des Lamellenpakets 36, ist eine weitere Anlaufscheibe 28 angeordnet. Jedoch kann diese auch entfallen oder eine anders geformte Anlaufscheibe vorgesehen sein. Über die eine oder die beiden Anlaufscheiben 28 stützt sich der Rotor in axialer Richtung der Welle 16 an den Lagern 18 ab.

Anstelle des Kommutators 26 kann als elektrisches Kontaktelement 24 auch ein Kollektor eines Generators vorgesehen sein. In beiden Fällen ist eine elektrische Kontaktierung des elektrischen Kontaktelements 24 über Bürsten 38, die in Bürstenköchern 40 geführt sind vorgesehen, wobei die Bürstenköcher 40 über Befestigungslaschen an einem Bürstenträger 42 der elektrischen Maschine 10 befestigt sind.

In Figur 2 ist eine Anlaufscheibe 28 vergrößert dargestellt. Diese weist einen Bereich 44 zur Schmiermittelrückführung in das Lager 18 auf. Hierzu erstreckt sich die Anlaufscheibe 28 ringförmig über die ihr zugewandte Stirnseite 46 des Lagers 18 (vgl. hierzu auch Figur 1). Am äußeren Rand weist sie eine axial überstehende Kante 48 auf, um Schmiermittel, wie zum Beispiel Öl, wieder zum Lager 18 zurückzuführen. Zudem bewirkt die Kante 48 einen Schutz des Kommutators 26 vor dem Schmiermittel. Der ringförmige Bereich 44 kann alternativ auch konisch oder gewölbt ausgebildet sein, und sich - wie in Figur 1 dargestellt - haubenförmig über das Lager 18 erstrecken, um den Rückfluss des Öls zu beeinflussen. Ebenso kann die Anlaufscheibe 28 auf der dem Lager 18 zugewandten Seite des ringförmigen Bereichs 44 weitere axial umlaufende Vorsprünge zur Rückführung des Schmiermittels aufweisen, auf die hier aber nicht im Detail eingegangen werden soll. Wesentlich ist, dass ein Dichtungsbereich vorgesehen ist, der den Stator 14, insbesondere den Kommutator 26, von einem etwaigen Ölfluss des Lagers 18 abdichtet.

An der ersten Stirnseite 32 der Anlaufscheibe 28 ist ein radialer Anlageabschnitt 50 für das Lager 18 und an der zweiten Stirnseite 34 ein radialer Anlageabschnitt 52 für den Rotor 14 ausgebildet. Die Auflage des Rotors 14 bzw. Ankers kann direkt am Anlageabschnitt 52 oder mittels des Kommutators 26 erfolgen. Erfindungsgemäß ist nun vorgesehen, dass die Anlaufscheibe 28 aus mindestens einer Hartkomponente 54 und einer Weichkomponente 56 besteht, wobei der am Rotor 14 anliegende Teil des Anlageabschnitts 52 durch die Weichkomponente 56 gebildet ist. Dieser Teil ist weiterhin in einzelne Kreissegmente 58 zur Anlage an den Rotor 14 unterteilt.

Der Anlageabschnitt 52 weist zwei in axialer Richtung der Welle 16 beabstandete Ebenen 60 und 62 auf, wobei die erste Ebene 60 durch die am Rotor 14 anliegenden Kreissegmente 58 des Anlageabschnitts 52 gebildet ist. Die zweite Ebene 62 ist zwischen der ersten Ebene 60 und dem Bereich 44 zur Schmiermittelrückführung angeordnet und besteht sowohl aus der Weichkomponente 56 als auch aus der Hartkomponente 54, während der Bereich 44 zur Schmiermittelrückführung ausschließlich durch die Hartkomponente 54 gebildet ist. Durch diese Anordnung wird die Kraft über einen elastischen Bereich - nämlich die als Weichkomponente 56 ausgebildete erste Ebene 60 - eingeleitet und das Dämpfungsverhalten weiter verbessert. Die Hartkomponente 54 der zweiten Ebene 62 verhindert dabei wirksam eine Beschädigung der Weichkomponente 56 der ersten Ebene 60 bei hohen Axialkräften.

In Figur 2 ist zu erkennen, dass die Hart- und die Weichkomponente 54, 56 der zweiten Ebene 62 in axialer Richtung auf demselben Niveau angeordnet sind. Erfindungsgemäß sind die beiden Komponenten 54, 56 in axialer Richtung der Welle 16 aber derart voneinander beabstandet, dass sich die Hartkomponente 54 in Richtung der ersten Ebene 60 weiter erstreckt als die Weichkomponente 56, jedoch unterhalb des Niveaus der ersten Ebene 60 verbleibt. Auf diese Weise kann ein definierter Anschlag in axialer Richtung erreicht werden, bis zu dem eine Dämpfung durch die Weichkomponente 56 gewährleistet ist.

Um eine zusätzliche Abdichtfunktion gegen Kriechöl aus dem Lager 18 in Richtung Rotor 14, insbesondere in Richtung des Kommutators 26, zu vermeiden, ist in vorteilhafter Weise die Weichkomponente 56 an ihrem Innendurchmesser über die gesamte axiale Ausdehnung ihres wellenseitigen Anlagebereichs 64 zwischen den beiden radialen Anlagebereichen 50, 52, umlaufend ausgebildet.

Besonders vorteilhaft ist, wenn die Hartkomponente 54 und die Weichkomponente 56 aus demselben Material, beispielsweise Hytrel, bestehen. Auf diese Weise kann die Anlaufscheibe 28 einstückig ausgebildet sein, wobei sich die Härtegrade (angegeben in Shore D) der Hartkomponente 54 und der Weichkomponente 56 um mindestens Shore D = 5 unterscheiden. Auf diese Weise ist eine deutliche Reduzierung der axialen Steifigkeit und somit eine Dämpfung in Axialrichtung durch Verwendung von zwei Hytrel-Materialien, z.B. Hytrel 5555 HS (Shore D = 55 +/- 2) mit 2K-Kontur aus Hytrel 4056 TPC-ET (Shore D max = 40) oder entsprechender Materialen mit vergleichbarer Eigendämpfung, Abriebfestigkeit und Temperaturstabilität, möglich.

Es sei abschließend noch darauf hingewiesen, dass das gezeigte Beispiel nicht auf die Figuren 1 und 2 beschränkt ist, sondern auch hiervon abweichende Einsatzformen und Anordnungen innerhalb der elektrischen Maschine 10 denkbar sind. Zudem haben die in den Figuren gezeigten Dimensionverhältnisse zwischen den Anlaufscheiben 28 und den übrigen Bauteilen der elektrischen Maschine 10, insbesondere den Lagern 18 und dem Rotor 14, keinen Einfluss auf die Erfindung als solche. Entsprechendes gilt für die Form und Größe der Kreissegmente 58 der ersten Ebene 60 sowie der Hard- und Weichkomponente 54, 56 der zweiten Ebene 62 des zweiten Anlagebereiches 52. Weiterhin sei erwähnt, dass alternativ oder ergänzend auch der erste Anlagebereich 50 den strukturellen Aufbau des zweiten Anlagebereichs 52 aufweisen kann.

## Patentansprüche

1. Anlaufscheibe (28) für eine elektrische Maschine (10) zur Anordnung auf einer Welle (16) zwischen einem Lager (18) und einem Rotor (14), vorzugsweise einem von Bürsten (38) beaufschlagten, rotierenden elektrischen Kontaktelement (24) und/oder einem Lamellenpaket (36) des Rotors (14), wobei die Anlaufscheibe (28) einen Bereich zur Dichtung mit zwei Stirnseiten (32, 34) aufweist und an jeder Stirnseite (32, 34) wenigstens ein radialer Anlageabschnitt (50, 52) für das Lager (18) bzw. den Rotor (14) vorhanden ist, wobei die Anlaufscheibe (28) aus mindestens einer Hartkomponente (54) und einer Weichkomponente (56) besteht, wobei der am Rotor (14) und/oder Lager (18) anliegende Teil des radialen Anlageabschnitts (50, 52) durch die Weichkomponente (56) gebildet ist,
**dadurch gekennzeichnet, dass** der radiale Anlageabschnitt (50, 52) mindestens zwei in axialer Richtung der Welle (16) beabstandete Ebenen (60, 62) aufweist, wobei eine erste Ebene (60) durch den am Rotor (14) anliegenden Teil (58) des Anlageabschnitts (52) gebildet ist und mindestens eine zweite Ebene (62) zwischen der ersten Ebene (60) und einem Bereich (44) zur Schmiermittelrückführung angeordnet ist, wobei die zweite Ebene (62) sowohl aus der Weichkomponente (56) als auch aus der Hartkomponente (54) besteht und
dass die Weichkomponente (56) und die Hartkomponente (54) zwischen der ersten Ebene (60) und dem Bereich (44) zur Schmiermittelrückführung in axialer Richtung der Welle (16) derart voneinander beabstandet sind, dass sich die Hartkomponente (54) in Richtung der ersten Ebene (60) weiter erstreckt als die Weichkomponente (56), jedoch unterhalb des Niveaus der ersten Ebene (60) verbleibt.

2. Anlaufscheibe (28) nach Anspruch 1, dadurch gekennezeichnet, dass der Bereich (44) zur Schmiermittelrückführung nur aus der Hartkomponente (54) besteht.

3. Anlaufscheibe (28) nach einem der vorhergehenden Ansprüche, **dadurch gekennzeichnet, dass** die Weichkomponente (56) an ihrem Innendurchmesser, vorzugsweise über die gesamte axiale Ausdehnung ihres wellenseitigen Anlagebereichs (64) zwischen den radialen Anlageabschnitten (50, 52), umlaufend ausgebildet ist.

4. Anlaufscheibe (28) nach einem der vorhergehenden Ansprüche, **dadurch gekennzeichnet, dass** die Hartkomponente (54) und die Weichkomponente (56) aus demselben Material, beispielsweise Hytrel, bestehen.

5. Anlaufscheibe (28) nach Anspruch 4, **dadurch gekennzeichnet, dass** die Anlaufscheibe (28) einstückig ausgebildet ist.

6. Anlaufscheibe (28) nach einem der vorhergehenden Ansprüche, **dadurch gekennzeichnet, dass** sich die Härtegrade der Hartkomponente (54) und der Weichkomponente (56) um mindestens Shore D = 5 unterscheiden.

7. Elektrische Maschine (10) mit zumindest einer Anlaufscheibe (28) nach einem der vorhergehenden Ansprüche.

## Claims

1. Thrust washer (28) for an electric machine (10) for arranging on a shaft (16) between a bearing (18) and a rotor (14), preferably a rotating electric contact element (24), which is influenced by brushes (38), or rather a laminate stack (36) of the rotor (14), wherein the thrust washer (28) comprises a region for providing a sealing arrangement with two end faces (32, 34), and at least one radial contacting section (50, 52) for the bearing (18) and the rotor (14) respectively is provided on each end face (32, 34), wherein the thrust washer (28) is embodied from at least a hard component (54) and a soft component (56), wherein the part of the radial contacting section (50, 52) that is lying on the rotor (14) and/or the bearing (18) is embodied by the soft component (56), **characterized in that** the radial contacting section (50, 52) comprises at least two planes (60, 62) that are spaced apart in the axial direction of the shaft (16), wherein a first plane (60) is embodied by the part (58) of the contacting section (52) that is lying on the rotor (14) and at least one second plane (62) is arranged between the first plane (60) and region (44) for returning the lubricating means, wherein the second plane (62) is embodied from both the soft component (56) and the hard component (54), and **in that** the soft component (56) and the hard component (54) between the first plane (60) and the region (44) for returning the lubricating means in the axial direction of the shaft (16) are spaced apart from each other in such a manner that the hard component (54) extends further in the direction of the first plane (60) than the soft component (56), nonetheless it remains below the level of the first plane (60).

2. Thrust washer (28) according to Claim 1, **characterized in that** the region (44) for returning the lubricating means is embodied sorely from the hard component (54).

3. Thrust washer (28) according to any one of the preceding claims, **characterized in that** the soft component (56) is embodied in a circumferential manner at its inner diameter, preferably over the entire axial extension of its shaft-side contacting region (64) between the radial contacting regions (50, 52).

4. Thrust washer (28) according to any one of the preceding claims, **characterized in that** the hard component (54) and the soft component (56) are embodied from the same material, for example Hytrel.

5. Thrust washer (28) according to Claim 4, **characterized in that** the thrust washer (28) is embodied as one piece.

6. Thrust washer (28) according to any one of the preceding claims, **characterized in that** the hardness of the hard component (54) and of the soft component (56) differ by at least Shore D = 5.

7. Electric machine (10) having at least one thrust washer (28) according to any one of the preceding claims.

## Revendications

1. Rondelle de butée (28) pour une machine électrique (10), destinée à être agencée sur un arbre (16) entre un palier (18) et un rotor (14), de préférence un élément de contact électrique rotatif (24) sollicité par des balais (38) et/ou un paquet de lamelles (36) du rotor (14), la rondelle de butée (28) comprenant une région pour l'étanchéité avec deux côtés frontaux (32, 34) et sur chaque côté frontal (32, 34) au moins une portion d'appui radiale (50, 52) pour le palier (18) ou le rotor (14) étant prévue, la rondelle de butée (28) étant constituée d'au moins un composant dur (54) et d'un composant souple (56), la partie de la portion d'appui radiale (50, 52) s'appliquant contre le rotor (14) et/ou le palier (18) étant formée par le composant souple (56), **caractérisée en ce que** la portion d'appui radiale (50, 52) comprend au moins deux plans (60, 62) espacés dans la direction axiale de l'arbre (16), un premier plan (60) étant formé par la partie (58) de la portion d'appui (52) s'appliquant contre le rotor (14) et au moins un deuxième plan (62) étant disposé entre le premier plan (60) et une région (44) pour la recirculation de lubrifiant, le deuxième plan (62) étant constitué à la fois du composant souple (56) et du composant dur (54) et
**en ce que** le composant souple (56) et le composant dur (54) sont espacés l'un de l'autre dans la direction axiale de l'arbre (16) entre le premier plan (60) et la région (44) pour la recirculation de lubrifiant, de telle sorte que le composant dur (54) s'étende plus loin dans la direction du premier plan (60) que le composant souple (56), mais demeure cependant en dessous du niveau du premier plan (60).

2. Rondelle de butée (28) selon la revendication 1, **caractérisée en ce que** la région (44) pour la recirculation de lubrifiant n'est constituée que du composant dur (54).

3. Rondelle de butée (28) selon l'une quelconque des revendications précédentes, **caractérisée en ce que** le composant souple (56) est réalisé de manière périphérique au niveau de son diamètre intérieur, de préférence sur toute l'étendue axiale de sa région d'appui (64) côté arbre entre les portions d'appui radiales (50, 52).

4. Rondelle de butée (28) selon l'une quelconque des revendications précédentes, **caractérisée en ce que** le composant dur (54) et le composant souple (56) sont constitués du même matériau, par exemple d'Hytrel.

5. Rondelle de butée (28) selon la revendication 4, **caractérisée en ce que** la rondelle de butée (28) est réalisée d'une seule pièce.

6. Rondelle de butée (28) selon l'une quelconque des revendications précédentes, **caractérisée en ce que** les degrés de dureté du composant dur (54) et du composant souple (56) diffèrent d'au moins 5 Shore D.

7. Machine électrique (10) comprenant au moins une rondelle de butée (28) selon l'une quelconque des revendications précédentes.
